# NEUE EUROPÄISCHE PATENTSCHRIFT

(11) **EP 2 789 741 B2**
(45) Veröffentlichungstag und Bekanntmachung des Hinweises auf die Entscheidung über den Einspruch: **26.12.2018**
(45) Hinweis auf die Patenterteilung: 06.04.2016
(21) Anmeldenummer: 13163570.8
(22) Anmeldetag: 12.04.2013
(51) Int. Cl.: E01C 19/48, E01C 23/01

(54) **Straßenfertiger mit einer Thermographievorrichtung**
Road finisher with a thermal imaging device
Finisseuse de route dotée d'un dispositif de thermographie

(43) Veröffentlichungstag der Anmeldung: 15.10.2014
(73) Patentinhaber: Joseph Vögele AG, 67075 Ludwigshafen (DE)
(72) Erfinder: Rutz, Arnold, 67065 Ludwigshafen (DE); Delius, Henning, 67374 Hanhofen (DE); Gotterbarm, Tobias, 67117 Limburgerhof (DE); Buschmann, Martin, 67435 Neustadt (DE); Pawlik, Christian, 67435 Neustadt (DE)
(74) Vertreter: Grünecker Patent- und Rechtsanwälte PartG mbB

(56) Entgegenhaltungen:
- WO-A1-2011/079208
- DE-A1-102008 058 481
- DE-A1-102011 100 008
- DE-U1-202009 016 129
- US-B1- 6 749 364

## Beschreibung

Die vorliegende Erfindung betrifft einen Straßenfertiger mit einer Thermographievorrichtung gemäß dem Anspruch 1.

Aus der US 6,749.364 B1 ist ein Straßenfertiger mit einer Wärmebildkamera bekannt. Die Wärmebildkamera ist auf eine neu eingebaute Asphaltschicht hinter der Einbaubohle gerichtet. Die Wärmebildkamera ist mit einer Steuereinheit gekoppelt, die die thermographischen Daten der Wärmebildkamera mit Positionsdaten verrechnet. Die georeferenzierten Daten können von der Steuereinheit abgespeichert werden und ggf. über eine Telematikeinheit an andere Straßenfertigerfahrzeuge bzw. Verdichterfahrzeuge versendet werden, worauf basierend diese ihre jeweiligen Einbauparameter angleichen können.

Die DE 20 2009 016 129 U1 offenbart eine Vorrichtung zur Temperaturmessung der Oberfläche von heißem Asphalt. Die Vorrichtung umfasst ein Gehäuse, in welchem ein Infrarottemperaturmesskopf beweglich angeordnet ist. Dieser wird mittels eines Motors hin und her bewegt. Dafür ist eine aufwendige Lagerung notwendig, die regelmäßig geschmiert werden muss.

Aus der DE 10 2008 058 481 A1 ist ein Asphaltierungssystem und Asphaltierungsverfahren bekannt, um einen Plan zum Asphaltieren eines Arbeitsbereiches aufzustellen, der auf einem Positionstemperaturmodel basiert. Dabei wird ein Straßenfertiger mit einem Temperatursensor zum Erfassen von Temperaturdaten einer Einbauschicht sowie mit einem Empfänger zum Erfassen von Positionsdaten offenbart. Den Temperatursensor bildet bspw. eine Infrarotkamera. Vorzugsweise ist der Temperatursensor an der Einbaubohle des Straßenfertigers befestigt. Weiterhin umfasst der Straßenfertiger eine Anzeigevorrichtung, auf welcher die Temperaturdaten sowie die Positionsdaten dem Bediener des Straßenfertigers anzeigbar sind. Die Temperaturdaten sowie die Positionsdaten können über einen Sender an nachfolgende Verdichterfahrzeuge weitergegeben werden, sodass diese ihre Verdichtungsparameter entsprechend einstellen. Um die Temperaturdaten sowie die Maschinenpositionsdaten aufzunehmen, könnte gemäß einer spezifischen Ausführungsform eine unbemannte Drohne zum Einsatz kommen, welche über die Asphaltdecke oder in der Nähe der Asphaltdecke fährt.

Bei den jeweiligen optischen Erfassungssystemen der US 6,749,364 B1 und DE 10 2008 058 481 A1 sind die zum Erfassen der Temperaturdaten und Positionsdaten vorgesehenen Mittel voneinander getrennt auf dem Straßenfertiger befestigt und über eine jeweilige Steuereinheit funktional miteinander verbunden. Das Verkabeln dieser Komponenten untereinander ist aufwendig und kompliziert und lässt sich nur durch einen Fachmann mit besonderen Vorkenntnissen durchführen. Weiterhin gelten die separat auf dem Straßenfertiger angeordneten Positions- und Temperaturdatenerfassungseinheiten als ungeschützt, wodurch sie durch die rauen Umgebungsbedingungen auf der Baustelle einem erhöhten Verschleiß ausgesetzt sind. Jedenfalls gelten diese Systeme als schwer nachrüstbar, wobei es insbesondere durch das einzelne separierte Anbringen, Ausrichten und Verbinden der Temperatur- und Positionsdatenerfassungseinheiten zu Komplikationen und langen Montagezeiten kommen kann. Nicht selten werden die teuren Erfassungseinheiten während des Anbaus beschädigt, bzw. nicht einwandfrei befestigt.

WO 2011/079208 A1 offenbart eine Wärmebildkamera mit einer Infraroterfassungseinheit sowie geeigneten Mitteln zur Positionsdatenbestimmung für das erfasste Wärmebild, wobei es sich dabei insbesondere um GPS-Positionsdaten handelt. Die Wärmebildkamera umfasst einen Griff, an welchem ein Bediener die Wärmebildkamera fassen kann und diese auf das Erfassungsobjekt ausrichten kann.

Es ist nun die Aufgabe der vorliegenden Erfindung, einen Straßenfertiger mit einer Thermographievorrichtung zur Verfügung zu stellen, welche gegen einen Diebstahl gut schützbar ist.

Diese Aufgabe wird gelöst mit den Merkmalen des Anspruchs 1. Verbesserte Weiterbildungen der Erfindung sind durch die Merkmale der Unteransprüche gegeben.

Die Erfindung betrifft einen Straßenfertiger mit einer daran lösbar befestigten Thermographievorrichtung zur Aufzeichnung eines georeferenzierten thermographischen Datensatzes mindestens eines Bereichs einer Einbauschicht. Erfindungsgemäß umfasst die Thermographievorrichtung ein Gehäuse, in welchem eine Erfassungseinheit zum Detektieren eines thermographischen Datensatzes sowie eine weitere Erfassungseinheit zum Detektieren eines raumbezogenen Datensatzes für den thermographischen Datensatz angeordnet sind.

Die Thermographievorrichtung des erfindungsgemäßen Straßenfertigers bildet ein kompaktes Thermographiemodul, welches, ohne besondere Kenntnisse zu erfordern, leicht am Straßenfertiger anbaubar sowie von diesem abbaubar ist. Dies ist insbesondere dann vorteilhaft, wenn es darum geht, einen Straßenfertiger mit der Thermographievorrichtung nachzurüsten, bzw. diese für Servicezwecke und zur Aufbewahrung abzunehmen.

Außerdem bietet das Gehäuse der Thermographievorrichtung den Erfassungseinheiten zum Detektieren des thermographischen Datensatzes und zum Detektieren des raumbezogenen Datensatzes einen hervorragenden Schutz. Weiterhin bietet das Gehäuse einen ausreichenden Hitzeschutz für die darin angeordneten Komponenten.

Der erfindungsgemäße Straßenfertiger eignet sich hervorragend dazu, ein Wärmebild einer neu verlegten Einbauschicht herzustellen, wobei dabei einfache Mittel zum Einsatz kommen, die wegen des modulartigen Aufbaus gut von jedermann handhabbar sind und einfach in Betrieb genommen werden können.

Vorzugsweise ist innerhalb des Gehäuses eine Box vorgesehen, die zur Aufnahme nässeempfindlicher Baugruppen der Thermographievorrichtung ausgebildet ist. Gemäß einer besonders bevorzugten Ausführungsform ist die Box wasserdicht aufgebaut, wobei sie insbesondere durch einen abdichtenden, vorzugsweise abnehmbaren Deckel verschließbar ist. Insbesondere kann die wasserdichte Box zur Aufnahme eines Bordrechners, einer Stromversorgungsquelle und/oder einer RTK-Einheit, welche weiter unten noch genauer beschrieben werden, ausgebildet sein. Bevorzugterweise sind im Deckel der Box und/oder in der Box selbst wasserdichte Kabeldurchführungen ausgebildet. Somit lassen sich die in der Box befindlichen Baugruppen besonders gut vor Feuchtigkeit schützen, wodurch deren Lebensdauer verlängerbar ist. Die Box schafft außerdem eine vergleichsweise einfache wasserdichte Struktur, welche sich einfacher wasserdicht ausbilden lässt als das Gesamtgehäuse. Komponenten, die sich nicht in der Box, sondern direkt unterhalb des Gehäuses befinden, besitzen eine entsprechende Schutzklasse und sind daher ebenfalls wasserdicht ausgebildet.

Von Vorteil ist es auch, wenn mindestens eine Seitenwand der wasserdichten Box integral mit dem Gehäuse der Thermographievorrichtung ausgebildet ist, vorzugsweise integral mit einem Gehäuseboden der Thermographievorrichtung. Dadurch ist es möglich, die Box sehr stabil im Gehäuse der Thermographievorrichtung anzuordnen.

Weiterhin kann es vorteilhaft sein, wenn im Gehäuse, vorzugsweise am tiefsten Punkt im Gehäuseboden, eine Auslassöffnung ausgebildet ist, durch die eingedrungenes Wasser wieder ablaufen kann. Dadurch wird verhindert, dass sich Wasser im Gehäuse der Thermographievorrichtung ansammelt, welches zur Beschädigung sowie Beeinträchtigung der Funktion der darin befindlichen Baugruppen führen könnte. Außerdem bietet die Auslassöffnung eine Luftansaugmöglichkeit für die später beschriebene Gebläseeinheit, um Luft zum Freiblasen der Kameraoptik anzusaugen. Dadurch kann der Gebläseeinheit auf einfache Art und Weise Luft zur Verfügung gestellt werden.

Gemäß einer Ausführungsform der Erfindung umfasst der Straßenfertiger einen Bedienstand mit einem Dach, an welchem die Thermographievorrichtung lösbar befestigt ist. Dort kann ein Bediener die Thermographievorrichtung vom Bedienstand aus leicht erreichen, sodass diese gut montiert bzw. demontiert werden kann. Die Montage der Thermographievorrichtung am Dach des Straßenfertigers bietet auch einen ausreichenden Abstand zur Einbaubohle um zu verhindern, dass aufsteigende Dämpfe aus der eingebauten heißen Einbauschicht zu der Thermographievorrichtung gelangen. Die exponierte Anbringung der Thermographievorrichtung relativ zur Einbaubohle verhindert auch, dass sie einer zu großen Hitze ausgesetzt ist. Durch die lösbare Befestigung der Thermographievorrichtung am Dach ist es auch möglich, diese für Wartungsarbeiten schnell abzubauen. Schließlich kann die Thermographievorrichtung vom Dach aus ein Wärmebild eines großen Bereichs auf der Einbauschicht erfassen.

Vorzugsweise umfasst die Thermographievorrichtung eine Befestigungseinheit, wodurch sie lösbar am Straßenfertiger befestigt werden kann. Durch die Befestigungseinheit kann die Thermographievorrichtung selbst während der Fahrt des Straßenfertigers stabil in ihrer gewünschten Lage positioniert werden. Vorteilhaft ist es auch, wenn die Befestigungseinheit mindestens einen Tragarm umfasst, durch den die Thermographievorrichtung am Straßenfertiger weit genug nach hinten über der Einbaubohle gehalten werden kann. Dies ermöglicht die Aufnahme eines Wärmebilds der frisch eingebauten Einbauschicht direkt hinter der Einbaubohle.

Ebenfalls ist es möglich, die Befestigungseinheit derart auszubilden, dass sie das Gehäuse der Thermographievorrichtung unmittelbar neben bzw. auf dem Dach des Straßenfertigers befestigt, um dieses möglichst weit vom Aufnahmeort entfernt zu halten, wodurch eine größere Fläche bzw. Einbaubreite erfassbar ist. Geometrien der Optik können dabei insbesondere durch die Entfernung, Größe und Anzahl der Messfelder, den Erfassungswinkel und/oder Hindernisse im Messfeld variieren.

Gemäß einer weiteren Ausführungsform der Erfindung ist am Dach des Straßenfertigers mindestens eine Aufnahme vorgesehen, um daran die Befestigungseinheit der Thermographievorrichtung zu lagern. Bei der Montage der Thermographievorrichtung am Dach des Straßenfertigers kann die Befestigungseinheit zunächst so in der Aufnahme positioniert werden, dass sie einwandfrei relativ zum Dach des Straßenfertigers ausgerichtet ist. Sobald die Befestigungseinheit der Thermographievorrichtung positionsgenau in der Aufnahme des Daches ausgerichtet ist, kann die Befestigungseinheit gemäß einer weiteren Ausführungsform mittels mindestens einer Schraubverbindung stabil am Dach bzw. in der Aufnahme des Daches befestigt werden. Dadurch wird dem Bediener die Montage der Thermographievorrichtung am Straßenfertiger erleichtert, wobei er dazu sowie zur Demontage der Thermographievorrichtung nicht auf Hilfe angewiesen ist. Außer oder anstelle der Schraubverbindung kann die Befestigungseinheit der Thermographievorrichtung auch alternative Schnellverschlüsse aufweisen. Beispielsweise könnte anstelle oder ergänzend zur Schraubverbindung auch ein Bajonettverschluss, ein Haken- oder Bügelverschluss vorgesehen sein, um die Befestigungseinheit kraftschlüssig und/oder formschlüssig am Dach des Straßenfertigers zu montieren.

Vorzugsweise ist die Befestigungseinheit der Thermographievorrichtung so ausgelegt, dass sie in einem ersten Schritt mittels im Dach vorgesehener schlüssellochartiger Langlöcher an das Dach gehängt werden kann. Wenn die Thermographievorrichtung auf diese Weise eingehängt ist, kann sie - ohne dass sie gehalten werden muss- mit zwei Schraubhebeln befestigt werden. Gemäß einer weiteren Ausführungsform der Erfindung ist eine Halterung vorgesehen, mit welcher die Thermographievorrichtung an der Hinterseite des Straßenfertigers auf Dachhöhe gehalten werden kann. mit einer solchen Halterung lässt sich die Thermographievorrichtung insbesondere dann erhöht positionieren, wenn der Straßenfertiger ohne Dach ausgebildet ist. Dadurch kann die Thermographievorrichtung bei einem solchen Fertiger ohne Dach auf gleicher Höhe wie bei einem Fertiger mit Dach gehalten werden.

Eine weitere Ausführungsform der Erfindung sieht vor, dass im Gehäuse ein Bordrechner angeordnet ist, der dazu ausgebildet ist, den thermographischen Datensatz mit dem raumbezogenen Datensatz zu georeferenzieren. Das Gehäuse sorgt dafür, dass der Bordrechner ausreichend vor Schlechtwettereinflüssen geschützt wird. Kurze Rechenwege zwischen dem Bordrechner und den beiden ebenfalls im Gehäuse befindlichen Erfassungseinheiten ermöglichen, dass der Bordrechner in Echtzeit den thermographischen mit dem raumbezogenen Datensatz georeferenzieren kann. Dadurch, dass der Bordrechner im Gehäuse der Thermographievorrichtung integriert ist, kann die Thermographievorrichtung problemlos an mehreren Straßenfertigern zum Einsatz kommen und bietet wegen ihrem modularen Aufbau die Möglichkeit zur Nachrüstbarkeit von Straßenfertigern, an welchen bisher keine Thermographievorrichtung vorgesehen ist.

Vorzugsweise ist auf dem Bordrechner ein Linux-Betriebssystem installiert. In der Praxis hat sich gezeigt, dass ein solches Betriebssystem besonders schnell die erfassten Datensätze georeferenzieren kann und sehr zuverlässig ist.

Eine weitere Ausführungsform der Erfindung sieht vor, dass der Bordrechner mindestens eine Schnittstelle umfasst, über die er mit anderen Einheiten des Straßenfertigers kommunizieren kann. Insbesondere kann der Bordrechner über die Schnittstelle an eine Steuereinheit des Straßenfertigers die georeferenzierten thermographischen Messergebnisse weiterleiten, basierend auf welchen die Steuereinheit bestimmte Einbauparameter automatisch einstellt und aktiviert, beispielsweise eine Tamperdrehzahl, eine Einbaubohlennivellieruhg, eine Bohlenheizleistung und/oder eine Geschwindigkeit der Verteilerschnecke, was zu einem verbesserten Verbau des Einbauguts und qualitativ verbesserten Einbauschichten führt.

Eine weitere Verbesserung der Erfindung gibt vor, dass die Schnittstelle für eine uni- oder bidirektionale Datenkommunikation ausgebildet ist. Dadurch kann der Bediener des Straßenfertigers auch selbst die Thermographievorrichtung ansteuern, beispielsweise um Aufnahmen eines gezielt ausgewählten Bereichs der Einbauschicht hinter der Einbaubohle zu machen. Vorstellbar ist es auch, dass der Bediener die Thermographievorrichtung derart mittels einer Bedienvorrichtung des Straßenfertigers ansteuern bzw. aktivieren kann, dass die Thermographievorrichtung Wärmebild-Schnappschüsse aufzeichnet.

Vorzugsweise ist die Schnittstelle eine CAN-BUS-Schnittstelle, durch welche insbesondere der Steuereinheit des Straßenfertigers schnell die kompletten Messergebnisse der Thermographievorrichtung überlieferbar sind.

Vorzugsweise kann die Steuereinheit des Straßenfertigers die georeferenzierten thermographischen Messergebnisse der Thermographievorrichtung mit anderen Messdaten des Straßenfertigers, beispielsweise mit Odometermessdaten des Straßenfertigers, verrechnen, um entlang der zurückgelegten Einbaustrecke des Straßenfertigers eine fortlaufende Wärmebilddarstellung der neu eingebauten Einbauschicht zu berechnen.

Bei einer weiteren vorteilhaften Ausführungsform der Erfindung umfasst der Straßenfertiger eine Displayanzeige, auf welcher sämtliche Messergebnisse der Thermographievorrichtung, vorzugsweise in Echtzeit und farblich anzeigbar sind. Vorzugsweise können Eingaben zum Ansteuern der Thermographievorrichtung auf der Displayanzeige mittels Touchfunktion gemacht werden. Die Displayanzeige bietet vorzugsweise auch die Möglichkeit, dem Bediener verbesserte Einbauparameter, z. B. eine Tamperdrehzahl, eine Einstellung der Nivellierzylinder und/oder eine Geschwindigkeit der Verteilerschnecke, basierend auf den Messergebnissen der Thermographievorrichtung vorzuschlagen, welche Vorschläge dann vom Bediener manuell akzeptiert oder abgelehnt werden können. Dies erleichtert dem Bediener den Straßenfertiger optimal zu führen.

Vorteilhaft ist es auch, wenn der Bordrechner mindestens eine USB-Schnittstelle aufweist, über die beispielsweise Updates für das Betriebssystem auf den Bordrechner installierbar sind und/oder ein Speichermedium, beispielsweise eine externe Festplatte anschließbar ist, die wahlweise im Gehäuse einsetzbar ist, um die Messergebnisse der Thermographievorrichtung abzuspeichern.

Bei einer weiteren Ausführungsform der Erfindung umfasst der Bordrechner eine drahtlose Schnittstelle, vorzugsweise eine GSM- oder Wi-Fi-Aritenne, über welche der Bordrechner drahtlos ansteuerbar ist, sowie Messergebnisse der Thermographievorrichtung drahtlos versenden kann. Dies erlaubt eine Kommunikation der Thermographievorrichtung mit externen Einheiten ohne direkte Verbindung.

Beispielsweise kann der Bordrechner über die drahtlose Schnittstelle Messergebnisse der Thermographievorrichtung an ein vorzugsweise auf GSM oder WIFI basierendes Telematiksystem versenden, welches gemäß dieser Ausführungsform zwischen dem Straßenfertiger und mindestens einem nachfolgenden Verdichterfahrzeug entlang der Einbaustrecke installiert ist. Dies ermöglicht einen Datenaustausch der jeweiligen Baustellenfahrzeuge untereinander, worauf basierend eine Anpassung unterschiedlicher Arbeitsparameter an den jeweiligen Fahrzeugen durchführbar ist. Beispielsweise kann ein Verdichterfahrzeug, das im Telematiksystem eingebunden ist, sein Walzschema an die georeferenzierte Thermographiedatenerfassung des vorausfahrenden Straßenfertigers anpassen.

Ein raumbezogenes Wärmebild lässt sich mittels der Thermographievorrichtung des erfindungsgemäßen Straßenfertigers für einen weiten Bereich der Einbauschicht erzeugen, da die Erfassungseinheit zum Detektieren des thermografischen Datensatzes eine Infrarotkamera umfasst. Durch die Infrarotkamera ist es möglich, ein genaues Wärmebild schnell über einen kompletten Bereich der Einbauschicht hinter der Einbaubohle zu erzeugen, ohne dass diese dafür innerhalb des Gehäuses bewegt werden muss.

Ebenfalls ist es möglich, mehrere Infrarotkameras, bspw. zwei Infrarotkameras im Gehäuse der Thermographievorrichtung zu installieren, um einen besonders großen Einbaubereich zu erfassen. Dabei könnte jede Infrarotkamera einen bestimmten Messbereich erfassen, wobei der in der Thermographievorrichtung vorgesehene Bordrechner die jeweiligen Messbereiche miteinander verrechnet, um das Wärmebild des gesamten zu erfassenden Messbereichs zu erhalten.

Vorzugsweise ist der Kameramessbereich (Einstellwinkel) in Abhängigkeit der veränderlichen Bohleneinbaubreite des Straßenfertigers einstellbar, ggf. automatisch. Dadurch kann der Kameramessbereich individuell auf unterschiedliche Bohlenbreiten angepasst werden, was insbesondere dann von Vorteil ist, wenn die Thermographievorrichtung bei unterschiedlichen Straßenfertigern verwendet wird.

Besonders vorteilhaft ist es, wenn die Infrarotkamera in dem Gehäuse starr angeordnet ist, wodurch auf zusätzliche Antriebseinheiten für die Bewegung der Kamera verzichtet werden kann. Dadurch, dass die Infrarotkamera starr im Gehäuse der Thermographievorrichtung angeordnet ist, ist die Thermographievorrichtung selbst auf holpriger Fahrbahn robust.

Optional kann vorgesehen sein, dass die Ausrichtung der Infrarotkamera manuell oder motorisch änderbar ist, um verschiedene Straßenbreiten abzutasten. Ein solches Verstellen der Infrarotkamera würde allerdings nicht fortlaufend während der Aufnahme durchgeführt werden, sondern nur um diese vor Beginn der Aufnahme auszurichten. Somit sind an der infrarotkamera, insbesondere an ihrer Lagerung keine Verschleißerscheinungen zu erwarten. Das Verstellen der Infrarotkamera dient also vorrangig dem Einstellen des Messpunktabstandes zur Fertigerbohle, wobei sich in Abhängigkeit des Messpunktabstandes zur Fertigerbohle die Breite des Erfassungsbereichs der Kamera einstellen lässt. Indem der Messpunktabstand vergrößert wird, lässt sich also ebenfalls die Breite des Erfassungsbereichs der Kamera vergrößern.

Bei einer verbesserten Ausführung der Erfindung ist im Gehäuse ein Gebläse vorgesehen, um bpsw. die Erfassungseinheit zum Detektieren des thermografischen Datensatzes vor Niederschlägen zu befreien, und um insbesondere die Optik der Thermografiekamera vor dem Niederschlag von Aerosolen zu schützen. Niederschläge auf der Optik führen zu einer Verschlechterung der Aufnahme und können die Messwerte verfälschen. Dies kann das Gebläse verhindern. Dadurch können insbesondere Serviceintervalle (Reinigen der Optik) verlängert werden, was zur reduzierten Instandhaltungskosten der Thermographievorrichtung führt. Das Gebläse kann mittels Gleich- oder Wechselstrom von einer Energiequelle des Straßenfertigers angetrieben werden. Alternativ kann das Gebläse auch einen eigenen elektrischen Antrieb, beispielsweise eine Batterie, umfassen, bzw. von einer separat im Gehäuse platzierten Stromversorgungseinheit versorgt werden.

Gemäß einer weiteren Ausführungsform der Erfindung umfasst die Gebläseeinheit einen Filter, um Aerosole von der Kamera fernzuhalten. Dadurch kann von der Gebläseeinheit ein besonders sauberer Luftstrom zum Objektiv der Infrarotkamera geblasen werden, um dieses von Niederschlag zu befreien.

Um einen besonders schnellen und zielgerichteten Luftstrom mittels dem Gebläse zu erhalten, kann das Gebläse eine Düse aufweisen, die beispielsweise auf das Objektiv der Infrarotkamera gerichtet ist, um zu verhindern, dass dieses anläuft. Als positiven Nebeneffekt ermöglicht das Gebläse eine wirksame Kühlung der Kamera.

Ebenfalls ist es möglich, dass das Objektiv der Infrarotkamera relativ zu bzw. in einer Öffnung im Gehäuse ausgerichtet ist, mit welcher das Objektiv eine Art Schlitzblende bildet, durch welche ein Luftstrom der Gebläseeinheit durchströmbar ist, um einen kontinuierlichen Luftstrom um das Objektiv zu bilden. Dadurch ist es möglich, Niederschläge, insbesondere Aerosole vom Objektiv der Infrarotkamera fern zu halten.

Eine positionsgenaue Georeferenzierung der thermografischen Messdaten ist insbesondere dann möglich, wenn die Erfassungseinheit zum Detektieren des raumbezogenen Datensatzes einen GNSS-Empfänger aufweist. Dieser kann beispielsweise als GPS-Empfänger ausgebildet und vorzugsweise zusätzlich um einen RTK-Funkempfänger ergänzt sein, durch welchen die GPS-Koordinaten mit einer sehr hohen Genauigkeit korrigiert werden können. Beispielsweise können über den integrierten RTK-Funkempfänger Korrekturdaten von einer lokalen Basisstation empfangen werden. Alternativ ist auch die Verwendung anderer Korrekturdatendienste vorstellbar. Die gemeinsame Verwendung eines RTK-Funkempfängers sowie eines GNSS-Empfängers ermöglicht, basierend auf den georeferenzierten thermografischen Messergebnissen der Thermographievorrichtung, ein genaues Navigieren des oder der drahtlos verbundenen Verdichterfahrzeuge und eine optimale Anpassung der Einbauparameter am Straßenfertiger.

Besonders kostengünstig und leicht zusammenbaubar ist die Thermographievorrichtung des erfindungsgemäßen Straßenfertigers dann, wenn das Gehäuse eine erste und eine zweite Gehäuseschale aufweist. Die beiden Gehäuseschalen können beispielsweise als Kunststoffschalen ausgebildet sein, die vorzugsweise mittels eines Spritzgussverfahrens herstellbar sind.

Vorzugsweise sind die erste und die zweite Gehäuseschale lösbar miteinander verbunden, so dass sie für Instandsetzungszwecke der Thermographievorrichtung einfach auseinander gebaut werden können, um dem Servicepersonal leichten Zugang zu den darin befindlichen Geräten zu ermöglichen. Beispielsweise, um den Filter des Gebläses zu tauschen oder zu reinigen.

Gemäß einer weiteren Ausführungsform der Erfindung ist zwischen den beiden Gehäuseschalen ein Dichtring eingespannt. Dieser sorgt für einen wasserdichten Verschluss der beiden Gehäuseschalen. Außerdem verhindert der Dichtring durch seine dämpfende Wirkung, dass es während der Einbaufahrt zu einer Geräuschentwicklung am Gehäuse der Thermographievorrichtung kommt.

Vorzugsweise ist im Gehäuse der Thermographievorrichtung ein Fenster ausgebildet, hinter der sich das Objektiv der Infrarotkamera befindet. Das Fenster kann entweder in der ersten und/oder in der zweiten Gehäuseschale ausgebildet sein.

Auf dem Fenster bzw. anstelle des Fensters wäre es gemäß einer weiteren Ausführungsform der Erfindung möglich, mehrere dünne Abreißfolien vorzusehen, die - wie es bei Abreißvisieren für Motorradhelme oder Formel 1 Helme üblich ist, bei Anhaften von Schmutz, bspw. Aerosolen, nacheinander abreißbar sind, um der Kameraoptik einen klaren Durchblick zu verschaffen. Bei einer solchen Ausführungsform wäre es sogar möglich, auf das zuvor erwähnte Gebläse zu verzichten, was zu einem vereinfachten Aufbau der Thermographievorrichtung führen würde.

Ausführungsformen der Erfindung werden anhand der nachfolgenden Figuren genau erläutert. Es zeigen
- Figur 1:: einen erfindungsgemäßen Straßenfertiger mit einer Thermographievorrichtung,
- Figur 2:: eine erste Perspektivdarstellung des erfindungsgemäßen Straßenfertigers mit der Thermographievorrichtung,
- Figur 3:: eine weitere Perspektivansicht des erfindungsgemäßen Straßenfertigers mit der Thermographievorrichtung,
- Figur 4:: eine erste Perspektivdarstellung der Thermographievorrichtung von unten,
- Figur 5:: eine zweite Perspektivdarstellung der Thermographievorrichtung von unten,
- Figur 6:: eine dritte Perspektivdarstellung der Thermographievorrichtung von oben,
- Figur 7:: eine offene Darstellung der Thermographievorrichtung mit Einbaukomponenten, und
- Figur 8:: eine Perspektivdarstellung der Thermographievorrichtung mit Einblick in das Innere des Gehäuses.

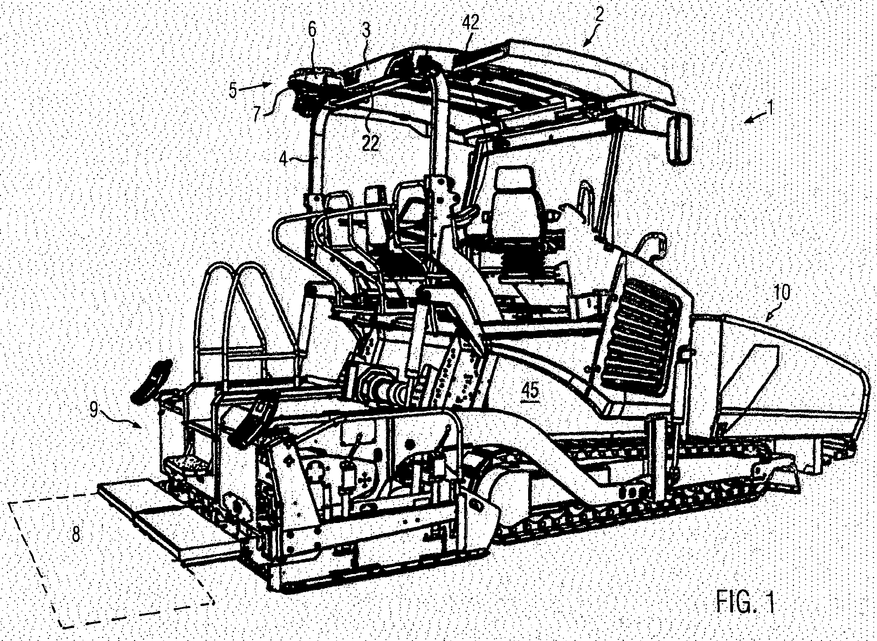

Die Figur 1 zeigt einen erfindungsgemäßen Straßenfertiger 1. Der erfindungsgemäße Straßenfertiger 1 umfasst einen Bedienstand 2 mit einem Dach 3, welches von einem Rahmen 4 des Bedienstandes 2 getragen wird. Am Dach 3 des Bedienstandes 2 ist eine Thermographievorrichtung 5 befestigt. Die Thermographievorrichtung 5 umfasst ein Gehäuse 6 mit einem Fenster 7. Das Fenster 7 ist auf einen Bereich 8 hinter einer Einbaubohle 9 gerichtet. Der Bereich 8 liegt während der Einbaufahrt auf einer Einbauschicht, die vom Straßenfertiger 1 neu verlegt wird.

Von einem Gutbunker 10 wird Einbaugut über eine nicht gezeigte Fördervorrichtung unterhalb des Bedienstandes 2 durch ein Chassis 45 des Straßenfertigers 1 nach hinten zur Einbaubohle 9 transportiert, von welcher es zu einer neuen Einbauschicht verarbeitet wird, auf welcher der von der Thermographievorrichtung 5 abgelichtete Bereich 8 liegt.

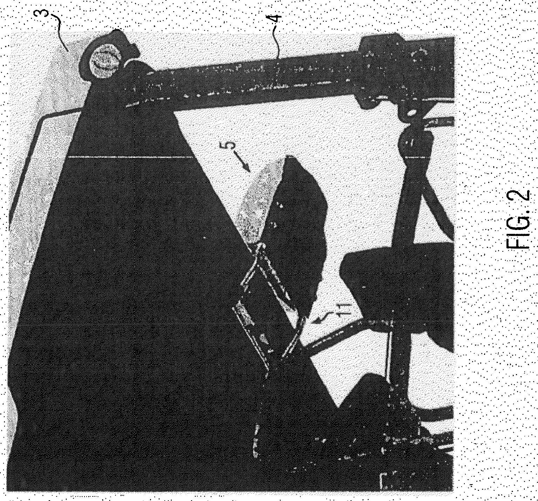

Die Figur 2 zeigt die an dem Dach 3 des Bedienstandes 2 befestigte Thermographievorrichtung 5 in einer Perspektivdarstellung. Die Thermographievorrichtung 5 ist mittels einer Befestigungseinheit 11 am Dach 3 des Straßenfertigers 1 befestigt. Selbstverständlich ist es auch möglich, die Thermographievorrichtung 5 mittels der Befestigungseinheit 11 direkt am Rahmen 4 des Bedienstandes 2 zu befestigen. In der Figur 2 ist die Thermographievorrichtung 5 mittels der Befestigungseinheit 11 auskragend relativ zum Dach 3 nach hinten befestigt. Als Alternative dazu könnte die Thermographievorrichtung 5 auch direkt mit ihrem Gehäuse 6 auf dem Dach 3 aufsitzen, und beispielsweise in einer dafür vorgesehenen Vertiefung oder an einer auf dem Dach 3 vorgesehenen Schiene befestigt werden. Durch eine Befestigung der Thermographievorrichtung 5 unterhalb des Daches 3 gemäß der Figur 2 ist es jedoch möglich, dass ein Bediener vom Bedienstand 2 aus die Thermographievorrichtung 5 sowie die Befestigungseinheit 11 der Thermographievorrichtung 5 gut erreichen kann, was insbesondere zur Montage bzw. Demontage für den Bediener hilfreich ist.

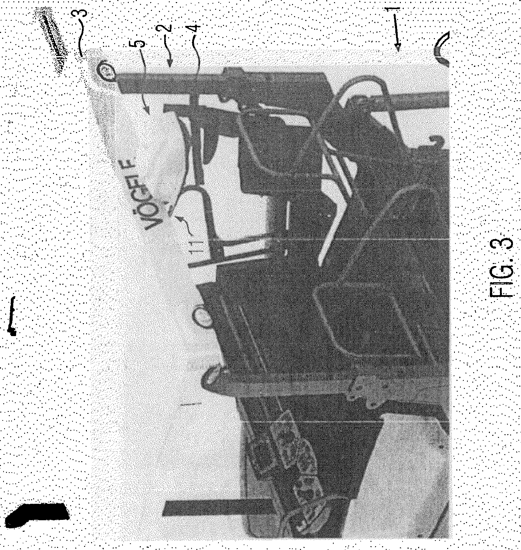

Eine weitere Perspektivdarstellung der am Dach 3 des Straßenfertigers 1 befestigten Thermographievorrichtung 5 ist in der Figur 3 gezeigt. Wie in der Figur 2 kann man auch in der Figur 3 gut sehen, dass die Thermographievorrichtung 5 durch die Befestigungseinheit 11 auskragend nach hinten über die Einbaubohle 9 gehalten wird. Ebenfalls kann man der Figur 3 gut entnehmen, dass die Thermographievorrichtung 5 im Wesentlichen mittig zum Dach 3 befestigt ist.

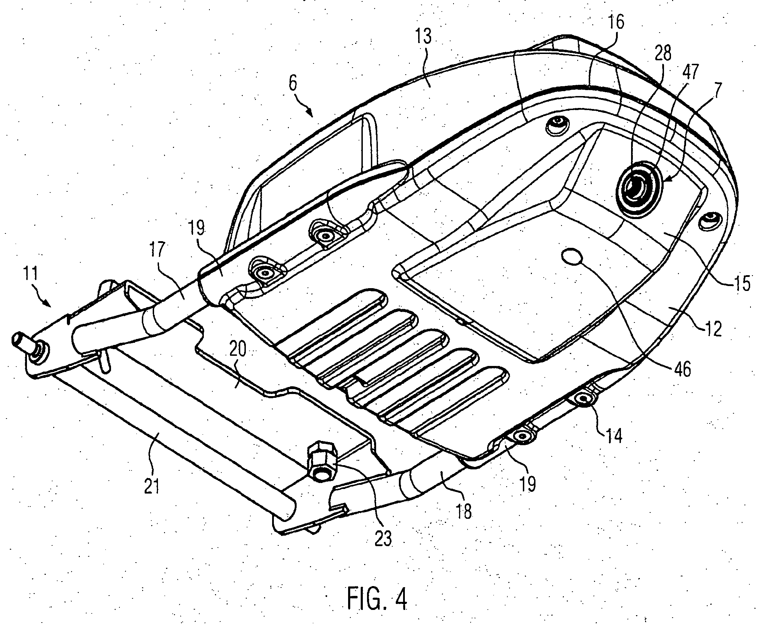

Die Figur 4 zeigt eine Perspektivdarstellung der Thermographievorrichtung 5 von unten. Das Gehäuse 6 der Thermographievorrichtung 5 hat eine erste und eine zweite bzw. eine untere und eine obere Gehäuseschale 12, 13. Die untere und die obere Gehäuseschale 12, 13 sind lösbar mittels Schrauben 14 zusammengebaut. Die untere Gehäuseschale 12 umfasst eine Mulde 15, in welcher das Fenster 7 vorgesehen ist. Die Mulde 15 hat insbesondere den Zweck, mindestens eine Erfassungseinheit zum Detektieren des thermographischen Datensatzes aufzunehmen und zum Fenster 7 auszurichten, was später genauer erläutert wird. Zwischen der unteren und der oberen Gehäuseschale 12, 13 ist ein Dichtring 16 vorgesehen, der zwischen den Gehäuseschalen 12, 13 derart eingespannt ist, dass entlang des Dichtrings 16 ein wasserdichter Abschluss möglich ist.

Die Figur 4 zeigt auch, dass die Befestigungseinheit 11 einen ersten und einen zweiten Bügel 17, 18 umfasst, die aus dem Gehäuse 6 der Thermographievorrichtung 5 herausragen. Die Bügel 17, 18 sind leicht gebogen und sind in dafür vorgesehenen Aufnahmen 19, die zwischen der unteren und der oberen Gehäuseschale 12, 13 ausgebildet sind, befestigt. In der Figur 4 werden die Bügel 17, 18 in den Aufnahmen 19 durch die Schrauben 14 festgehalten. An den sich vom Gehäuse 6 abgewandten Enden der Bügel 17, 18 ist eine Befestigungsplatte 20 vorgesehen. Diese kann beispielsweise mit den Enden der Bügel 17, 18 verschweißt sein. Die Befestigungsplatte 20 trägt einen Stab 21, der, wie die Befestigungsplatte 20 selbst, zu einem Schnellverschlusssystem gehört, um die Thermographievorrichtung 5 am Dach 3 bzw. am Rahmen 4 des Bedienstandes 2 lösbar zu befestigen. Zur lösbaren Befestigung der Thermographievorrichtung 5 wird der Stab 21 in mindestens eine Hakenaufnahme 22 (siehe Figur 1) eingeschoben. Die Hakenaufnahme 22 ist am Dach 3 bzw. am Rahmen 4 des Bedienstandes 2 ausgebildet. Weiterhin sieht man in der Figur 4, dass an der Befestigungsplatte 20 eine Schraubverbindung 23 ausgebildet ist, die ebenfalls auf der anderen Seite der Befestigungsplatte 20 vorhanden ist, jedoch vom Bügel 17 verdeckt ist. Mittels dieser Schraubverbindung 23 kann die Thermographievorrichtung fest am Dach 3 bzw. am Rahmen 4, lösbar befestigt werden.

Der Stab 21 und/oder die Befestigungsplatte 20 der Befestigungseinheit 11 können als Positionierhilfe vom Bediener verwendet werden, um die Thermographievorrichtung 5 relativ zum Bedienstand 2 des Straßenfertigers 1 auszurichten, bevor der Bediener mittels der Schraubverbindung 23 die Thermographievorrichtung 5 vollends am Bedienstand 2 des Sträßenfertigers 1 sichert. Dies ermöglicht dem Bediener eine einfache Montage der Thermographievorrichtung 5 am Bedienstand 2 des Straßenfertigers 1.

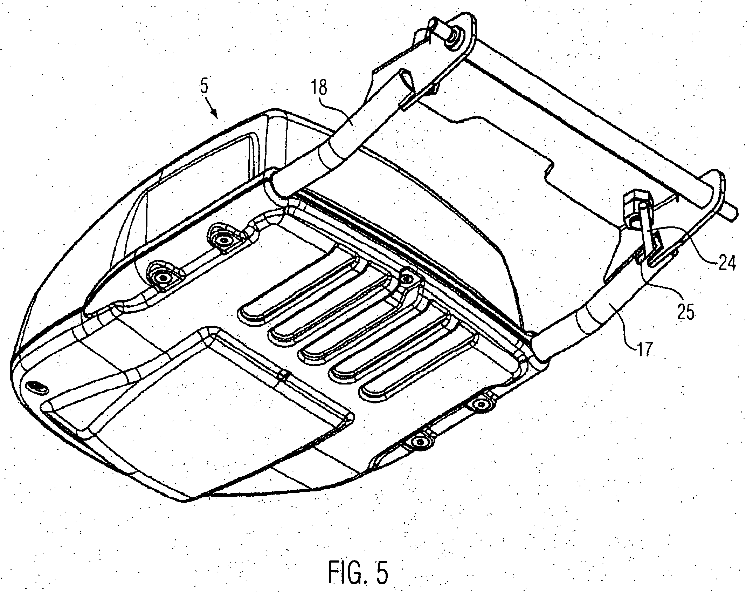

Die Figur 5 zeigt eine weitere Perspektivdarstellung der Thermographievorrichtung 5 von unten. In der Figur 5 kann man gut sehen, dass die Bügel 17, 18 als Rohrabschnitte ausgebildet sind. Der Bügel 17 nimmt in seinem Rohrabschnitt ein Kabel 24 auf, welches sich ins Innere des Gehäuses 6 der Thermographievorrichtung 5 erstreckt. Das Kabel 24 erstreckt sich durch eine Öffnung 25 des Bügels 17 ins Freie. Das Kabel 24 kann als elektrisches Versorgungskabel und/oder als vorzugsweise bidirektionales Datenkommunikationskabel ausgebildet sein und verbindet zumindest einen Teil der im Gehäuse 6 angeordneten Einheiten mit dem Straßenfertiger 1.

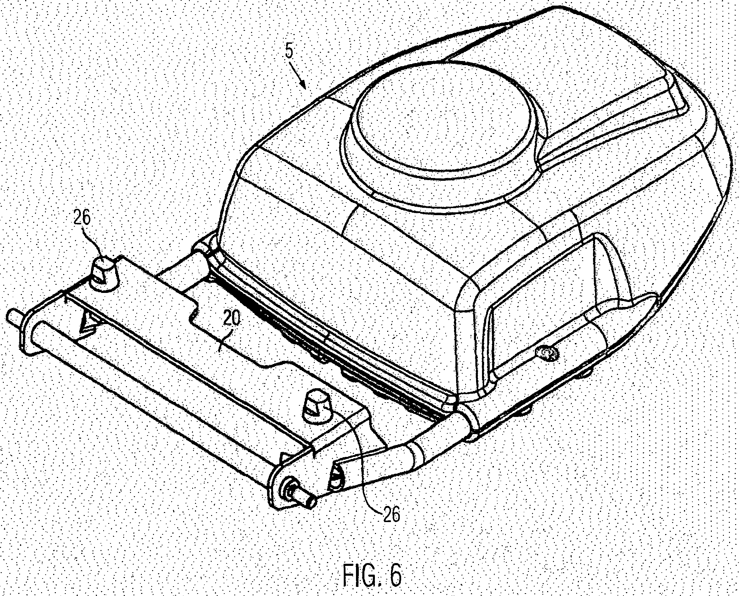

Die Figur 6 zeigt schematische Befestigungen 26 für die Aufhängung in den zuvor erwähnten schlüssellochartigen Aufnahmen. Vorzugsweise sind die Befestigungen 26 pilzförmig ausgebildet und können daher formschlüssig in die schlüssellochartig geformten Aufnahmen eingeschoben werden. Durch die Befestigungen 26 kann das Thermografiemodul 5 am Dach des Straßenfertigers 1 eingehängt werden, so dass eine Befestigung mit nicht gezeigten Klemmhebeln als Schnellverschluss möglich ist, ohne gleichzeitig das Thermografiemodul 5 heben zu müssen.

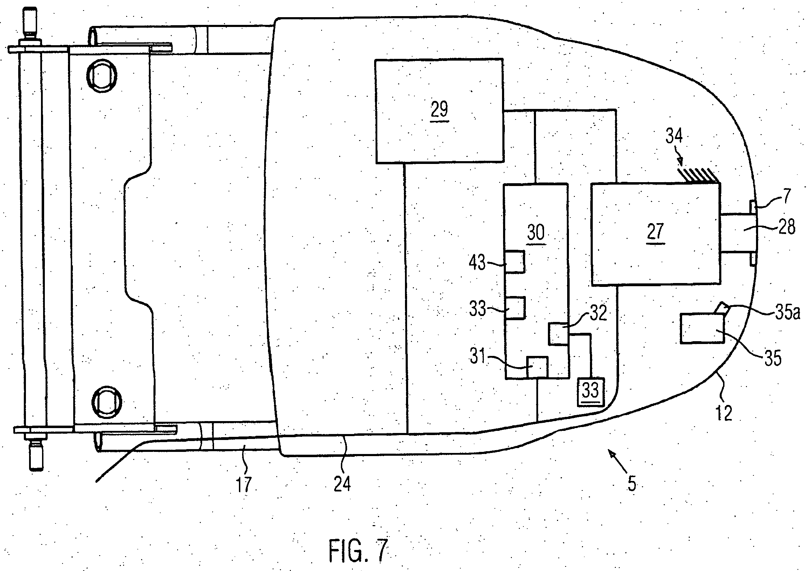

Die Figur 7 zeigt eine schematische Darstellung der Thermographievorrichtung 5 ohne die obere Gehäuseschale 13 und die Box 41 von oben. Durch die abgenommene obere Gehäuseschale 13 sind die inneren Komponenten der Thermographievorrichtung 5 zu sehen. Insbesondere sind auf der unteren Schale 12 der Thermographievorrichtung 5 eine Infrarotkamera 27 mit einem Objektiv 28 angeordnet. Das Objektiv 28 ist zum Fenster 7 hin ausgerichtet.

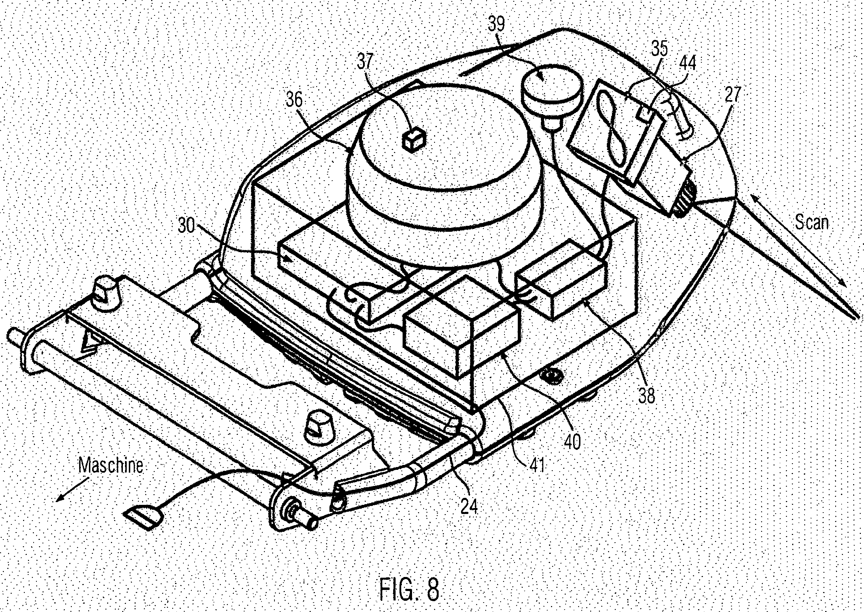

Die Infrarotkamera 27 ist mit dem Bordrechner 30 verbunden, der sich gemäß der Figur 8 in der wasserdichten Box 41 innerhalb des Thermografiemoduls 5 befindet. Dort befindet sich auch der RTK-Empfänger 38, der ebenfalls mit dem Bordrechner 30 verbunden ist, sowie die zentrale Stromversorgung 40 für alle elektrischen Komponenten des Thermographiemoduls 5. Von der Box 41 aus verläuft das Daten-/Versorgungskabel 24 zum Straßenfertiger. Über das Kabel 24 kann der Bordrechner 30 vom Straßenfertiger 1 aus angesteuert werden. Der Bordrechner 30 wiederum steuert alle Funktionen innerhalb des Thermografiemoduls 5. Auf diese Weise kann das Thermografiemodul 5 unter Umständen auch autark arbeiten, zum Beispiel auf anderen Maschinen als den eigenen. Außerdem können über das Kabel 24 Messdaten thermographischer Art von der Infrarotkamera 27 an den Straßenfertiger 1 gesendet werden, die dann über ein in der Figur 7 nicht dargestellte Displayanzeige 42 auf dem Straßenfertiger 1 abbildbar sind. Eine solche Displayanzeige 42 ist in der Figur 1 dargestellt.

Das Objektiv 28 der Infrarotkamera 27 ist derart mit dem Fenster 7 des Gehäuses 6 ausgerichtet, dass die Infrarotkamera 27 ein einwandfreies Wärmebild, beispielsweise des in der Figur 1 dargestellten Bereichs 8, erfassen kann.

Außerdem zeigt die Figur 7 eine Erfassungseinheit 29 zum Detektieren eines raumbezogenen Datensatzes für den thermographischen Datensatz, der mittels der Infrarotkamera 27 erfassbar ist. Die Erfassungseinheit 29 ist ebenfalls mit dem Kabel 24 verbunden. Die Erfassungseinheit 29 umfasst vorzugsweise einen GNSS-Empfänger, der beispielsweise ein GPS-Empfänger ist, welcher ggf. durch einen RTK-Funkempfänger zum Erzeugen einer hochgenauen Positionsdatenbestimmung ergänzt ist. Im Falle eines integrierten RTK-Funkempfängers können auch Korrekturdaten von einer lokalen Basisstation empfangen werden. Alternativ ist auch die Verwendung anderer Korrekturdatendienste vorstellbar.

Im Gehäuse 6 der Thermographievorrichtung 5 ist gemäß der Figur 7 des Weiteren ein Bordrechner 30 angeordnet. Der Bordrechner 30 ist über das Kabel 24 mit der Erfassungseinheit 27, die als Infrarotkamera ausgebildet ist, und mit der Erfassungseinheit 29 zum Detektieren der raumbezogenen Messdaten für den thermographischen Datensatz verbunden. Der Bordrechner 30 ist insbesondere dazu ausgebildet, die detektierten Datensätze der Erfassungseinheiten 27, 29 miteinander zu verrechnen, um einen georeferenzierten Thermographiedatensatz herzustellen, der über das Kabel 24, beispielsweise an eine Steuereinheit des Straßenfertigers 1, übertragbar ist. Des Weiteren können über den Rechner 30 die Einstellungen des RTK-Empfängers 38 (z. B. der Empfangskanal) und des GPS-Empfängers 36 vorgenommen werden. Vorzugsweise verwendet der Bordrechner 30 die von einer Bohlenbreitenmesseinheit ermittelte Bohlenbreite, um die Thermographiedaten der Kamera, insbesondere der Wärmebildbreite auf die Bohlenbreite zu beschränken.

Ebenfalls zeigt die Figur 7, dass der Bordrechner 30 eine Schnittstelle 31 umfasst. Die Schnittstelle 31 kann beispielsweise eine CAN-Bus-Schnittstelle sein, über welche der Bordrechner 30 vom Straßenfertiger 1 aus über das Kabel 24 ansteuerbar ist, um beispielsweise Schnappschüsse mit der daran funktional gekoppelten Infrarotkamera 27 auszuführen. Ebenfalls können Messergebnisse der Erfassungseinheiten 27, 29 vom Bordrechner 30 verrechnet und automatisch über die CAN-Bus-Schnittstelle 31 und das Kabel 24 an den Straßenfertiger 1 gesendet werden, der die Messergebnisse beispielsweise zur Verbesserung von Einbauparametern verwendet.

Der in der Figur 7 dargestellte Bordrechner 30 umfasst weiterhin eine USB-Schnittstelle 32, die mit einem Speichermedium 33 verbunden ist, auf welchem georeferenzierte Thermographiedatensätze von dem Bordrechner 30 abspeicherbar sind. Ebenfalls ist der Bordrechner 30 gemäß einer Ausführungsform dazu ausgebildet, von dem Speichermedium 33 Sollmessdatensätze abzurufen und mit den aktuell erfassten georeferenzierten Thermographiedatensätzen zu vergleichen. Mittels eines solchen Vergleichs kann der Bordrechner 30 vorzugsweise über das Kabel 24 Empfehlungen an den Straßenfertiger 1 abgeben, wie beispielsweise Einbauparameter zu ändern sind.

Auch ist es möglich, über die USB-Schnittstelle 32 ein Update für das Betriebssystem des Bordrechners 30 zu installieren.

Der Bordrechner 30 gemäß der Figur 7 umfasst auch eine drahtlose Schnittstelle 43, die beispielsweise über GSM oder Wi-Fi Messdatensätze der georeferenzierten Thermographieaufnahmen des Bereichs 8 drahtlos an ein oder mehrere nachfolgende Verdichterfahrzeuge bzw. an ein Telematiksystem versendet. Alternativ dazu wäre es jedoch auch vorstellbar, dass die georeferenzierten Thermographiedaten zunächst vom Bordrechner aus über das Kabel 24, an eine Steuereinheit des Straßenfertigers 1 gesendet werden, von wo aus die Daten durch eine an Bord des Straßenfertigers 1 vorgesehene drahtlose Schnittstelle versendet werden.

In der Figur 7 ist auch zu sehen, dass die Erfassungseinheit 27 zum Detektieren des thermographischen Datensatzes, die vorzugsweise eine Infrarotkamera umfasst, mit einem Festlager 34 starr im Gehäuse 6, insbesondere in der unteren Gehäuseschale 12 befestigt ist. Eine starre Befestigung der Erfassungseinheit 27 bedingt eine exakte Aufnahme eines Wärmebildes über dem Bereich 8 und verhindert auch, dass die Erfassungseinheit 27 verrutscht. Alternativ dazu ist für die Infrarotkamera eine bewegliche, vornehmlich einrastende Montage denkbar, die es ermöglicht, mindestens zwei unterschiedliche Bereiche an Einbaubreiten abzudecken:
Bereich KLEIN:
   Die Kamera bildet einen Bereich nahe an der Bohle 9 des Straßenfertigers 1 ab. Die Distanz der Messpunkte zur Kamera ist klein. Damit ist die abgetastete Breite klein.
Bereich GROSS:
   Die Kamera bildet einen Bereich weiter hinter der Bohle 9 ab. Die Distanz der Messpunkte zur Kamera ist groß. Damit ist auch die abgetastete Breite größer.

Alternativ könnte man die Kamera auch motorisch - angesteuert über den Bordrechner 30 - verfahren, um so eine adäquate Messposition einzustellen.

Neben der Erfassungseinheit 27 ist in der unteren Gehäuseschale 12 ein Gebläse 35 angeordnet. Das Gebläse 35 hat den Zweck zu verhindern, dass innerhalb des Gehäuses 6 der Thermographievorrichtung 5 Niederschläge, insbesondere im Bereich des Fensters 7 und des Objektivs 28 der Infrarotkamera 27 entstehen. Das Gebläse 35 ist in der Figur 7 mit dem Kabel 24 verbunden, über welches es mit Strom versorgt werden kann. Alternativ dazu kann im Gebläse 35 eine separate Energiequelle, beispielsweise eine Batterie, vorgesehen sein. Für einen zielgerichteten und hohen Luftstrom kann das Gebläse 35 eine Düse 35a umfassen, durch die insbesondere das Fenster 7 und das Objektiv 28 vor Niederschlägen befreit werden können. Damit sich im Gehäuse 6 der Thermographievorrichtung 5 kein zu großer Druck aufbaut, kann der durch das Gebläse 35 geforderte Luftstrom durch die Rohrabschnitte der Bügel 17, 18 nach außen unter das Dach 3 des Straßenfertigers 1 entweichen. Dadurch, dass sich die Rohrabschnitte der Bügel 17, 18 bis unter das Dach 3 des Straßenfertigers 1 erstrecken, ist es nicht möglich, dass Nässe von oben in die Rohrabschnitte und somit in das Gehäuse 6 der Thermographievorrichtung 5 eindringt.

Das Gebläse 35 bläst gemäß einer Ausführungsform der Erfindung einen Luftstrom durch eine kreisförmige Düse 47 (siehe Figur 4) um das Objektiv 28. Durch diese Lüftumspülung wird das Objektiv 28 der Kamera 27 vor Aerosolen (Bitumen) geschützt. Das Gebläse 35 bezieht die Luft (Ansaugung) im Wesentlichen durch eine am tiefsten Punkt des Gehäusebodens angebrachte Öffnung 46 (Wasserablauf) (Figur 4) und durch das Rohr, das das Daten-/Versorgungskabel 24 enthält. Da auch in der angezogenen Luft Aerosole enthalten sein können besitzt das Gebläse 35 einen Filter 44, der dem Gebläse 35 vorgelagert ist.

Die Thermographievorrichtung 5, welche von außen betrachtet im Wesentlichen das Gehäuse 6 und die Befestigungseinheit 11 umfasst, bildet einen modulartigen Aufbau, der sich optimal dazu eignet, an unterschiedlichen Straßenfertigertypen nachgerüstet zu werden. Für Wartungs- und Servicezwecke - oder als Diebstahlschutz - lässt sich die Thermographievorrichtung 5 außerdem schnell vom Straßenfertiger 1 abbauen und kann an diesem auch wieder problemlos erneut befestigt werden. Dies ist dann vorteilhaft, wenn der Straßenfertiger außer Betrieb genommen oder transportiert werden soll. Durch ihr kompaktes Design bietet die Thermographievorrichtung 5 am erfindungsgemäßen Straßenfertiger 1 vor allem den Vorteil, dass sie sich im Betrieb des Straßenfertigers nicht durch ihre Baugröße bzw. Anordnung am Straßenfertiger 1 bemerkbar macht, wobei andere funktionale Baugruppen sowie Messsysteme des Straßenfertigers 1 keine Einschränkung durch die Thermographievorrichtung 5 erfahren.

Die Figur 8 zeigt eine weitere schematische Perspektivdarstellung einer optionalen Thermographievorrichtung 5 des erfindungsgemäßen Straßenfertigers, wobei durch die obere Gehäuseschale 13 Einblick in das Innere des Gehäuses 6 und die Box 41 der Thermographievorrichtung 5 möglich ist. Im Inneren des Gehäuses 6 ist der Bordrechner 30, die Infrarotkamera 27, das Gebläse 35, ein GPS-Empfänger 36 mit einer integrierten Antenne 37, ein RTK-Empfänger 38 mit einer damit verbundenen RTK-Antenne 39 sowie eine Stromversorgung 40 angeordnet. Um die einzelnen Komponenten im Gehäuse 6 der Thermographievorrichtung 5 stabil zu lagern, ist die Box 41 im Raum des Gehäuses 6 eingebaut. Die Box 41 kann jedoch auch als Trageplatte ausgebildet sein, um den einzelnen Komponenten eine stabile Befestigung zu bieten. Die durch den Bordrechner 30 georeferenzierten thermographischen Messdaten können über das Kabel 24 durch den Rohrabschnitt des Bügels 17 an eine im Straßenfertiger 1 vorgesehene Steuereinheit gesendet werden.

Gemäß der Figur 8 wird die komplette elektrische Energie zum Betrieb der elektrischen Komponenten innerhalb des Gehäuses 6 von der Stromversorgung 40 geliefert. Dies bietet vor allem den Vorteil, dass die Thermographievorrichtung 5 nicht von einer Stromversorgung von außerhalb des Gehäuses 6 abhängig ist, was ihre flexible Anwendbarkeit bei unterschiedlichen Straßenfertigern verbessert.

## Patentansprüche

1. Straßenfertiger (1) mit einer Thermographievorrichtung (5) zur Aufzeichnung eines georeferenzierten thermografischen Datensatzes mindestens eines Bereichs (8) einer Einbauschicht, wobei die Thermographievorrichtung (5) ein Gehäuse (6) umfasst, in welchem eine Erfassungseinheit (27) zum Detektieren eines thermografischen Datensatzes angeordnet ist, wobei die Erfassungseinheit (27) zum Detektieren des thermografischen Datensatzes eine Infrarotkamera umfasst,
**dadurch gekennzeichnet,**
**dass** die Thermographievorrichtung (5) lösbar am Straßenfertiger (1) befestigt ist, dass in dem Gehäuse (6) weiterhin eine Erfassungseinheit (29) zum Detektieren eines raumbezogenen Datensatzes für den thermografischen Datensatz angeordnet ist, und dass ein Einstellwinkel, vorzugsweise ein Messbereich der Erfassungseinheit (27) zum Detektieren eines thermographischen Datensatzes in Abhängigkeit einer Bohleneinbaubreite des Straßenfertigers (1) einstellbar ist.

2. Straßenfertiger nach Anspruch 1, **dadurch gekennzeichnet, dass** der Straßenfertiger (1) einen Bedienstand (2) mit einem Dach (3) umfasst und die Thermographievorrichtung (5) lösbar am Dach (3) befestigt ist.

3. Straßenfertiger nach Anspruch 1 oder 2, **dadurch gekennzeichnet, dass** die Thermographievorrichtung (5) eine Befestigungseinheit (11) umfasst, wodurch sie lösbar am Straßenfertiger (1) befestigt werden kann.

4. Straßenfertiger nach einem der vorigen Ansprüche, **dadurch gekennzeichnet, dass** im Gehäuse (6) ein Bordrechner (30) angeordnet ist, der dazu ausgebildet ist, den thermografischen Datensatz mit dem raumbezogenen Datensatz zu georeferenzieren.

5. Straßenfertiger nach Anspruch 4, **dadurch gekennzeichnet, dass** auf dem Bordrechner (30) ein Linux-Betriebssystem installiert ist.

6. Straßenfertiger nach Anspruch 4 oder 5, **dadurch gekennzeichnet, dass** der Bordrechner (30) mindestens eine Schnittstelle (31) umfasst, über die er mit anderen Einheiten des Straßenfertigers (1) kommunizieren kann.

7. Straßenfertiger nach Anspruch 6, **dadurch gekennzeichnet, dass** die Schnittstelle (31) für eine uni- oder bidirektionale Datenkommunikation ausgebildet ist.

8. Straßenfertiger nach Anspruch 7, **dadurch gekennzeichnet, dass** die Schnittstelle (31) eine CAN-BUS-Schnittstelle ist.

9. Straßenfertiger nach einem der vorigen Ansprüche, **dadurch gekennzeichnet, dass** die Infrarotkamera starr im Gehäuse (6) angeordnet ist.

10. Straßenfertiger nach einem der vorigen Ansprüche, **dadurch gekennzeichnet, dass** im Gehäuse (6) ein Gebläse (35) vorgesehen ist, um insbesondere die Erfassungseinheit (27) zum Detektieren des thermografischen Datensatzes von Niederschlägen zu befreien.

11. Straßenfertiger nach Anspruch 10, **dadurch gekennzeichnet, dass** das Gebläse (35) eine Düse (35a) aufweist.

12. Straßenfertiger nach einem der vorigen Ansprüche, **dadurch gekennzeichnet, dass** die weitere Erfassungseinheit (29) zum Detektieren des raumbezogenen Datensatzes einen GNSS-Empfänger (36) aufweist.

13. Straßenfertiger nach einem der vorigen Ansprüche, **dadurch gekennzeichnet, dass** das Gehäuse (6) der Thermographievorrichtung eine erste und eine zweite Gehäuseschale (12, 13) aufweist.

14. Straßenfertiger nach einem der vorigen Ansprüche, **dadurch gekennzeichnet,**
**dass** im Gehäuse (6)eine Box (41) verbaut ist, die wasserdicht abgeschlossen ist.

15. Straßenfertiger nach einem der vorigen Ansprüche, **dadurch gekennzeichnet, dass** im Gehäuse (6) der Thermographievorrichtung (5) mehrere, vorzugsweise zwei Erfassungseinheiten zum Detektieren eines thermographischen Datensatzes angeordnet sind.

16. Straßenfertiger nach einem der vorigen Ansprüche, **dadurch gekennzeichnet, dass** die Thermographievorrichtung (5) mittels einer Halterung an einem Chassis (45) des Straßenfertigers (1) befestigbar ist, wobei die Thermographievorrichtung (5) mittels der Halterung im Wesentlichen auf Höhe des Dachs (3) des Straßenfertigers (1) positionierbar ist.

## Claims

1. Road finishing machine (1) with a thermographic device (5) for recording a georeferenced thermographic data record of at least one region (8) of a pavement layer, the thermographic device (5) comprising a housing (6) in which a detection unit (27) for detecting a thermographic data record is disposed, wherein said detection unit (27) for detecting the thermographic data record comprises an infrared camera,
**characterized in that**
the thermographic device (5) is releasably fixed to the road finishing machine (1), that in the housing (6) also a detection unit (29) for detecting a space-related data record for the thermographic data record is disposed, and that a setting angle, preferably a measuring range of the detection unit (27) for detecting a thermographic data record, may be adjusted depending on a screed paving width of the road finishing machine (1).

2. Road finishing machine according to claim 1, **characterized in that** said road finishing machine (1) comprises a control platform (2) with a roof (3), and the thermographic device (5) is releasably fixed to the roof (3).

3. Road finishing machine according to claim 1 or 2, **characterized in that** said thermographic device (5) comprises a fixing unit (11) by which it may be releasably fixed to the road finishing machine (1).

4. Road finishing machine according to one of the preceding claims, **characterized in that** an onboard computer (30) is arranged in the housing (6), which is designed to georeference the thermographic data record with the space-related data record.

5. Road finishing machine according to claim 4, **characterized in that** a Linux operating system is installed in said onboard computer (30).

6. Road finishing machine according to claim 4 or 5, **characterized in that** said onboard computer (30) comprises at least one interface (31) via which it may communicate with other units of the road finishing machine (1).

7. Road finishing machine according to claim 6, **characterized in that** said interface (31) is embodied for unidirectional or bidirectional data communication.

8. Road finishing machine according to claim 7, **characterized in that** said interface (31) is a CAN-BUS interface.

9. Road finishing machine according to one of the preceding claims, **characterized in that** said infrared camera is rigidly arranged in the housing (6).

10. Road finishing machine according to one of the preceding claims, **characterized in that** in the housing (6), a blower (35) is provided for clearing in particular said detection unit (27) for detecting the thermographic data record from precipitations.

11. Road finishing machine according to claim 10, **characterized in that** said blower (35) comprises a nozzle (35a).

12. Road finishing machine according to one of the preceding claims, **characterized in that** said further detection unit (29) for detecting the space-related data record comprises a GNSS receiver (36).

13. Road finishing machine according to one of the preceding claims, **characterized in that** said housing (6) of the thermographic device comprises a first and a second housing shells (12, 13).

14. Road finishing machine according to one of the preceding claims, **characterized in that** in the housing (6), a box (41) is installed which is sealed in a watertight manner.

15. Road finishing machine according to one of the preceding claims, **characterized in that** in the housing (6) of the thermographic device (5), several, preferably two detection units for detecting a thermographic data record are disposed.

16. Road finishing machine according to one of the preceding claims, **characterized in that** said thermographic device (5) may be mounted to a chassis (45) of the road finishing machine (1) by means of a mounting, wherein the thermographic device (5) may be positioned by means of the mounting essentially at the level of the roof (3) of the road finishing machine (1).

## Revendications

1. Finisseur de route (1) comprenant un dispositif de thermographie (5) pour reproduire un jeu de données thermographiques géo-référencé d'au moins une zone (8) d'une couche de revêtement ou d'enrobé, le dispositif de thermographie (5) comprenant un boitier (6) dans lequel est agencée une unité d'acquisition (27) pour la détection d'un jeu de données thermographiques, et l'unité d'acquisition (27) comprenant une caméra à infrarouge pour détecter ou relever le jeu de données thermographiques, **caractérisé**
**en ce que** le dispositif de thermographie (5) est fixé de manière amovible au finisseur de route (1), **en ce que** dans le boitier (6) est en outre agencée une unité d'acquisition (29) destinée à détecter ou relever un jeu de données de positionnement spatial pour le jeu de données thermographiques, et **en ce qu'**un angle de réglage, de préférence une zone de mesure de l'unité d'acquisition (27) destinée à la détection d'un jeu de données thermographiques, est réglable en fonction d'une largeur de table de pose d'enrobé du finisseur de route (1).

2. Finisseur de route selon la revendication 1, **caractérisé en ce que** le finisseur de route (1) comporte un poste de conduite (2) avec un toit (3), et le dispositif de thermographie (5) est fixé de manière amovible au toit (3) .

3. Finisseur de route selon la revendication 1 ou la revendication 2, **caractérisé en ce que** le dispositif de thermographie (5) comprend une unité de fixation (11), par l'intermédiaire de laquelle il peut être fixé de manière amovible au finisseur de route (1).

4. Finisseur de route selon l'une des revendications précédentes, **caractérisé en ce que** dans le boitier (6) est agencé un calculateur de bord (30), qui est conçu pour géo-référencer le jeu de données thermographiques avec le jeu de données de positionnement spatial.

5. Finisseur de route selon la revendication 1, **caractérisé en ce que** dans le calculateur de bord (30) est installé un système d'exploitation Linux.

6. Finisseur de route selon la revendication 4 ou la revendication 5, **caractérisé en ce que** le calculateur de bord (30) comporte au moins une interface (31), par l'intermédiaire de laquelle il est en mesure de communiquer avec d'autres unités du finisseur de route (1) .

7. Finisseur de route selon la revendication 6, **caractérisé en ce que** l'interface (31) est conçue pour une communication de données uni- ou bidirectionnelle.

8. Finisseur de route selon la revendication 7, **caractérisé en ce que** l'interface (31) est une interface à bus CAN.

9. Finisseur de route selon l'une des revendications précédentes, **caractérisé en ce que** la caméra à infrarouge est montée de manière rigide dans le boitier (6).

10. Finisseur de route selon l'une des revendications précédentes, **caractérisé en ce que** dans le boitier (6) est prévu un ventilateur (35), pour débarrasser, notamment le dispositif d'acquisition (27) destiné à la détection du jeu de données thermographiques, de retombées ou précipitations.

11. Finisseur de route selon la revendication 10, **caractérisé en ce que** le ventilateur (35) présente une buse (35a).

12. Finisseur de route selon l'une des revendications précédentes, **caractérisé en ce que** ladite autre unité d'acquisition (29) destinée à la détection du jeu de données de positionnement spatial comporte un récepteur GNSS (36) (de Global Navigation Satellite System à savoir système de positionnement par satellites).

13. Finisseur de route selon l'une des revendications précédentes, **caractérisé en ce que** le boitier (6) du dispositif de thermographie comprend une première et une deuxième coque de boitier (12, 13).

14. Finisseur de route selon l'une des revendications précédentes, **caractérisé en ce que** dans le boitier (6) est monté un coffret (41), qui est fermé de manière étanche à l'eau.

15. Finisseur de route selon l'une des revendications précédentes, **caractérisé en ce que** dans le boitier (6) du dispositif de thermographie (5) sont agencées plusieurs, de préférence deux unités d'acquisition destinées à la détection d'un jeu de données thermographiques.

16. Finisseur de route selon l'une des revendications précédentes, **caractérisé en ce que** le dispositif de thermographie (5) peut être fixé, au moyen d'un support de maintien, sur un châssis (45) du finisseur de route (1), le dispositif de thermographie (5) pouvant être positionné, au moyen du support de maintien, sensiblement au niveau du toit (3) du finisseur de route (1) .
